# EUROPEAN PATENT SPECIFICATION

(11) **EP 1 280 645 B1**
(45) Date of publication and mention of the grant of the patent: **03.03.2004**
(21) Application number: 01930318.9
(22) Date of filing: 09.05.2001
(51) Int. Cl.: B29C 45/26, B29C 45/64, B29C 45/56

(54) **METHOD AND INSTALLATION FOR INJECTION MOULDING A PLASTIC ARTICLE**
VERFAHREN UND EINRICHTUNG ZUM SPRITZGIESSEN EINES KUNSTSTOFFGEGENSTANDES
PROCEDE ET INSTALLATION DE MOULAGE PAR INJECTION D'UN ARTICLE EN MATIERE PLASTIQUE

(30) Priority: 09.05.2000 NL 1015140
(43) Date of publication of application: 05.02.2003
(73) Proprietor: O.T.B. Group B.V., 5657 EB Eindhoven (NL)
(72) Inventor: KOK, Ronaldus, Joannes, Cornelis, Maria, NL-5613 BE Eindhoven (NL); HOMPUS, Michael, Adrianus, Theodorus, NL-5701 AJ Helmond (NL); EVERS, Marinus, Franciscus, Johannes, NL-5665 GT Geldrop (NL)
(74) Representative: van Westenbrugge, Andries
(86) International application number: PCT/NL2001/000354
(87) International publication number: WO 2001/087569

(56) References cited:
- PATENT ABSTRACTS OF JAPAN vol. 2000, no. 03, 30 March 2000 (2000-03-30) -& JP 11 353720 A (DAINIPPON PRINTING CO LTD), 24 December 1999 (1999-12-24) -& DATABASE WPI Week 200011 Derwent Publications Ltd., London, GB; AN 2000-121751 XP002157153
- PATENT ABSTRACTS OF JAPAN vol. 010, no. 323 (M-531), 5 November 1986 (1986-11-05) & JP 61 130015 A (SUMITOMO BAKELITE CO LTD), 17 June 1986 (1986-06-17) -& DATABASE WPI Week 198630 Derwent Publications Ltd., London, GB; AN 1986-194880 XP002157154
- PATENT ABSTRACTS OF JAPAN vol. 1997, no. 02, 28 February 1997 (1997-02-28) -& JP 08 258085 A (RICOH CO LTD), 8 October 1996 (1996-10-08)

## Description

The invention relates to the injection moulding of plastic articles, for example information carriers such as CDs and DVDs. With information carriers of this type a plastic disc is used which contains a structure, such as a spiral track of small pits, in which the information concerned is stored, for example for reproducing sound, image or software in general. Other structures or groupings of geometric shapes are also possible.

The quality of the track of minuscule pits is extremely important for the reliable reproduction of the stored information.

In the production of such an information carrier hot, fluid plastic is injected into a mould under high pressure. This mould usually contains a master disc containing the negative of the track in the end product. Relatively high pressures are used in order to be able to reproduce in the plastic, in the correct manner, even those parts of the track that are the greatest distance away from the injection opening of the mould.

The mould and in particular the installation in which the mould is accommodated must be able to withstand the high pressure. For this reason the mould parts from which the mould is made up are pressed onto one another under very high prestressing during injection of the plastic. This prestressing is usually supplied by powerful hydraulic piston/cylinder devices. However, the forces generated in the installation by these piston/cylinder devices under a hydraulic pressure of about 300 bar are so high that, despite the heavyweight construction of the installation, appreciable deformations still nevertheless arise.

Moreover, it is found that the high prestressing does not always meet the requirement to keep the mould parts reliably pressed onto one another when injecting the plastic under high pressure. The mould parts can nevertheless still be moved away from one another (axially) and in the transverse direction (radially) with respect to one another for a short time, which phenomenon in turn has to be compensated for in some other way. Consequently, fairly large variations in the quality of the product produced must be accepted. In the worst case it is possible that the abovementioned structure is even not obtained. This means that, despite the heavy and expensive installation that is usually used, an optimum production process cannot be achieved.

A prior art method for the injection moulding of a plastic article comprises the following steps:
- the provision of a mould having at least two mould parts which can be moved with respect to one another,
- injecting a heated, fluid material into the mould cavity under pressure.

Such a method is disclosed in JP-A-11353720. According to said prior art method, the mould cavity is controlled by applying a prescribed force onto the mould parts. This means that the size of the mould cavity as defined between said mould parts is determined by the force applied. Thus, dependent on a prescribed compression force, a certain mutual position of the mould parts is obtained. The disadvantage of such method is that the position of the mould parts is not the result of a direct controlling action.

The object of the invention is to provide a method by means of which the position of the mould parts can be directly controlled. Said object is achieved by the provision of positioning means for positioning the mould parts with respect to one another in a nominal mutual position such that a mould cavity is obtained, which nominal mutual position is adjustable during or directly after injection, and the provision of a control device influencing the position means by rapid control action in such a way that the desired nominal mutual position of the mould parts defining the mould cavity is adjustably maintained as desired when injecting the material into the mould cavity under pressure or directly after injection.

Reference is also made to the method as disclosed in JP-A-61130015. This prior art method as well is related to controlling the force by means of which the mould parts are clamped onto each other. Thus, as a result of said method the mutual position of the mould parts is not directly controlled either.

With the method according to the invention holding the mould parts clamped onto one another under a very high prestressing is dispensed with. Instead of this the mould parts are held by positioning means in a specific desired position, which yields the intended mould cavity. With this arrangement the mould parts can be in contact with one another, possibly with some prestressing. It is also conceivable to position the mould parts with some mutual play with respect to one another, in which case timely interruption of the feed must then be taken into account during injection.

Although the hot, molten plastic is injected under high pressure, for example a pressure of 200.10⁵ N/m², even with the method according to the invention, the pressure falls as the plastic flows out between the mould parts. Normal atmospheric pressure prevails at the "front" of the plastic flowing out, such that the degree of filling is readily controllable even when the mould parts are not completely closed.

In any event it must be ensured that the plane parallelism of the mould halves is maintained when carrying out the method according to the invention. This can be achieved by operating the positioning means in the desired manner. In contrast to the prior art, the plane parallelism is not achieved by physically pressing the mould halves against one another. This means that according to the invention the mould halves are aligned with respect to one another not by pressing them against one another but by positioning them with respect to one another by means of, for example, actuators, in particular screw actuators.

Since the mould parts are held accurately with respect to one another, their position with respect to one another can also be adjusted during or immediately following injection. This can be desirable, for example, in connection with compensation for shrinkage of the cooling plastic material.

The method according to the invention can in particular be used for processing plastics. These can be either thermoplastics or thermosetting plastics. Furthermore, it is possible to process not only substances having a relatively low viscosity, such as molten plastic, but also more viscous, kneadable substances, such as ceramics.

The method according to the invention can in particular be used in the production of information carriers. In this context the invention therefore also relates to the injection moulding of an information carrier for a CD or DVD, comprising the provision of a mould, one mould half of which contains a master disc containing a spiral track for forming a corresponding mirror-image track in the information carrier, as well as the step for moving the mould parts towards one another during injection of the plastic material. The mould cavity is reduced in size somewhat during this operation. The distance travelled by this latter movement can be, for example, 120 nm.

Moving the mould parts towards one another over such a very small distance is sufficient to ensure that the projections on the master disc are pressed well into the plastic material.

The master disc, which usually is made of nickel, is accommodated in the mould. The thickness dimensions of this master disc therefore also have an influence on the dimensions of the product produced therewith. Any irregularities in the dimensions of the master disc can be compensated for by the positioning means.

Furthermore, the installation can be adjusted during production should this be necessary. In this context, the method according to the invention also comprises influencing the positioning means as a function of the result of at least one thickness measurement of an article injection-moulded in a previous cycle.

With this procedure, the thickness can optionally be measured in several positions, in order to produce an article of uniform thickness.

The invention is also related to an installation for injection moulding of a plastic article by means of the method according to one of the preceding claims, comprising:
- a mould having two mould parts which can be moved with respect to one another,
- injection means for injecting the hot, molten plastic into the mould cavity.

Such an installation is disclosed in JP-A-11353720. According to the invention, the installation is characterized by:
- positioning means for positioning the mould parts with respect to one another in a nominal mutual position such that a mould cavity is obtained, which nominal mutual position of the mould parts is adjustable during or directly after injection, and
- a control device for influencing the positioning means by rapid control action in such a way that the desired nominal mutual position of the mould parts defining the mould cavity is adjustably maintained as desired when injecting the material into the mould cavity under pressure or directly after injection.

The positioning means preferably comprise screw actuators, each of which can be driven by its own motor. Such screw actuators offer the possibility of holding the mould parts in a reliable and stable manner against the pressure of the injected plastic material. Very fine adjustment movements can also be carried out by means of these actuators, especially if the speed is low. The drive is preferably effected by means of servomotors.

Each screw actuator can have a nut that, by means of a bearing, is supported in a block such that it can turn, which block carries one of the mould parts and in which block the mould cavity can also be located, as well as a channel for feeding hot, molten plastic. Furthermore, each screw actuator can have a screw spindle that is connected to a yoke, which yoke carries the other mould part in such a way that said other mould part can be moved towards and away from the mould part in the block by operating the screw actuators.

The block, which, for example, is made of steel, provides a stable and dimensionally stable support for the mould and the screw actuators. In combination with the absence of high internal prestressing, this yields a relatively simple, reliable construction.

In this context it is furthermore important that the block contains a cavity in which the one mould part is located and in which the other mould part can be moved by means of the screw actuators in a tightly fitting manner.

The screw spindles can each be connected to a column on which a linear bearing engages by means of which the block is supported in a movable manner.

The invention will be explained in more detail below with reference to the installation shown in the figures for carrying out the method according to the invention.

Figure 1 shows a section through the installation in accordance with I - I in Figure 2.

Figure 2 shows a perspective view of the installation.

Figure 3 shows a detail of the mould cavity when carrying out the method.

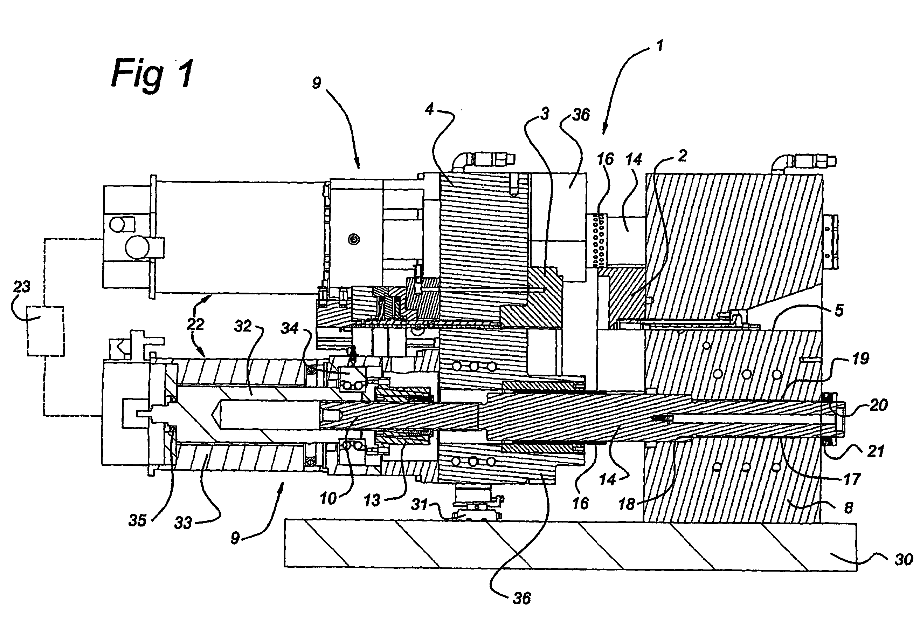

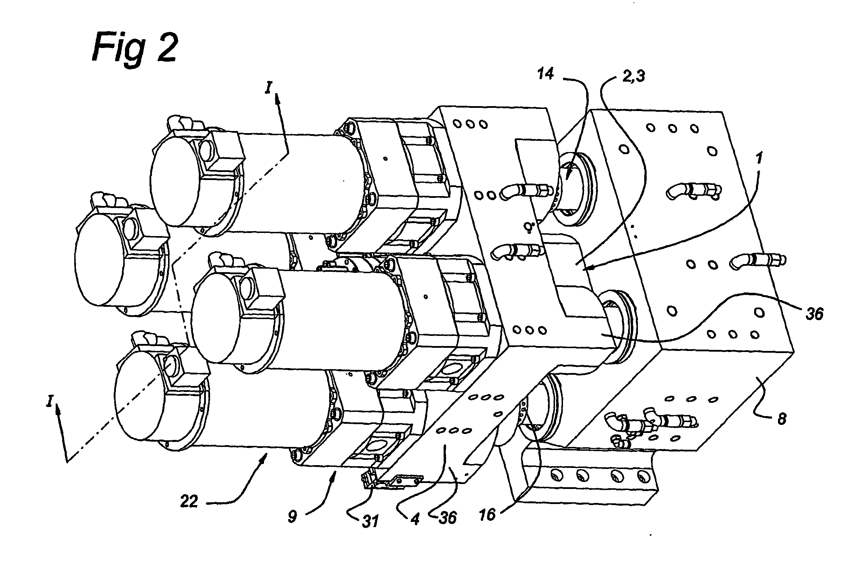

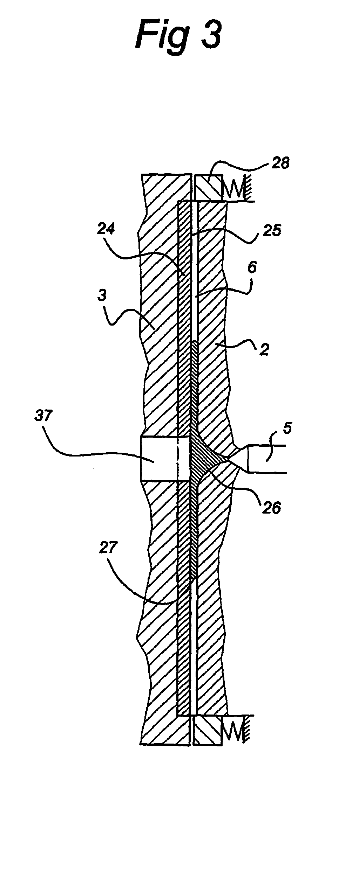

The installation according to the invention for injection moulding, for example, a CD or a DVD, which is shown in Figure 1 and Figure 2, contains a mould that comprises the mould parts 2 and 3 and is indicated in its entirety by 1. The mould is accommodated between the yoke 8 and the block indicated by 4. A feed channel 5 for feeding hot, molten plastic material via the mould half 2 into the mould cavity 6 between the mould parts 2, 3 (see Figure 3) runs through the yoke 8. The air displaced during injection is able to escape by means of a resiliently compressed vent ring 28 that surrounds the mould part 2.

The mould part 2 is rigidly accommodated on the yoke 8, which, in turn, is rigidly supported on the base 30. The other mould part 3 is accommodated on the block 4 that is supported on the base 30 by means of carriages 31 such that it can be moved with respect to the yoke 8.

The ability of the block 4 to move is ensured by four screw actuators 9, two of which are shown in the section in Fig. 1.

Each screw actuator 9 has a screw spindle 10, that is fixed by means of column 14 to the yoke 8.

The columns 14 are accommodated in the bores 17 in the yoke 8 such that they fit tightly. In particular, each column 14 has a shoulder 18 that is in contact with the material of the yoke 8 around the bore 17, whilst the narrowed section 19 adjoining the shoulder 18 is provided with a threaded end 20, on which a tensioning nut 21 engages in each case. The columns 14 are thus each fixed to the yoke 8 under prestressing.

Each screw actuator 9 also has a nut 13, which by means of grooved rollers known per se interacts with the screw spindle 10 (roller screw). The nut 13 is rigidly fixed to the rotor 32 of the servomotor, which is indicated in its entirety by 22. The stator 33 thereof is fixed with respect to the block 4.

The unit consisting of nut 13 and rotor 32 is supported by means of the double row angle-contact ball bearing 34 and by the single row ball bearing 35 such that it can turn with respect to the block 4. The column 14 is also slideably supported in the block 4 by a linear ball bearing 16. The linear bearing 16 is located in a protruding collar 36 of the block 4. The advantage of this is that the bearings 16 laterally surround the mould 2, 3, as a result of which very stable support of the mould, which does not give rise to any tendency to tilt, is ensured.

On actuating the motor 22 the nut 13 is turned, with the consequence that the block 4 connected thereto via bearings 34, 35 is moved linearly with respect to the screw spindle 10, the column 14 and thus with respect to the yoke 8. During this movement the block 4 remains accurately positioned with respect to the yoke 8 by the linear ball bearings 16, which in the embodiment in question are constructed as ball bearing bushes.

The screw actuators 9 can each be controlled by means of the control device 23 in such a way that the mould parts 2 and 3 are fixed a specific distance apart. The mould parts 2, 3 are not clamped to one another in this position. By virtue of the rapid control action of the control device 23, the desired mutual spacing can, however, be maintained, despite the high pressure of the hot molten plastic material fed into the mould cavity 6 via channel 5.

The screw actuators 9 can even be operated dynamically by the control device 23 when filling the mould cavity with the plastic material in order, if necessary, to compensate for the pressure and if necessary to move the mould parts 2, 3 a little further towards one another.

This can be useful especially when producing data carriers, in which a large number of minuscule pits, cavities and the like have to be made in the plastic surface.

As shown in Figure 3, a master disc 24 is accommodated in the mould cavity, a spiral pattern with projections being present on the surface 25 of said master disc 24 facing the mould cavity 6.

As an alternative, however, a data carrier of a different shape, for example rectangular, can also be produced. The pattern can then consist of rows of pits and the like.

When the plastic material 26 is injected via the channel 5 plastic material spreads through said mould cavity 6, as defined by the front 27.

The mould halves 2, 3 are held stable during this operation and can even be some distance apart if this is necessary in order to obtain the desired thickness of the mould cavity 6.

## Claims

1. Method for the injection moulding of a plastic article comprising the following steps:
- the provision of a mould (1) having at least two mould parts (2, 3) which can be moved with respect to one another,
- injecting a heated, fluid material (26) into the mould cavity under pressure,
**characterized by**
- the provision of positioning means (9, 22) for positioning the mould parts (2, 3) with respect to one another in a nominal mutual position such that a mould cavity (6) is obtained, which nominal mutual position is adjustable during or directly after injection, and
- the provision of a control device (23) influencing the position means (9, 22) by rapid control action in such a way that the desired nominal mutual position of the mould parts defining the mould cavity (6) is adjustably maintained as desired when injecting the material (26) into the mould cavity (6) under pressure or directly after injection.

2. Method according to Claim 1, comprising positioning the mould parts (2, 3) some distance apart enclosing a narrow gap between them.

3. Method according to Claim 1 or 2, comprising positioning the mould parts (2, 3) with respect to one another such that they are plane parallel.

4. Method according to Claim 1, 2 or 3, comprising moving the mould parts (2, 3) a small distance towards one another during or following injection of the plastic material (26) into the mould cavity (6) under pressure, in order to compensate for shrinkage in the plastic material (26) during the cooling thereof.

5. Method according to Claim 4, for the injection moulding of an information carrier for a CD or DVD, comprising the provision of a mould (1), one mould part (3) of which contains a master disc (24) which contains a spiral series of projections or pits in order to form a corresponding series of depressions or elevations in the information carrier, comprising the step of moving the mould parts (2, 3) towards one another.

6. Method according to Claim 5, comprising influencing the positioning means (9, 22) as a function of the thickness dimensions of the master disc (24).

7. Method according to one of the preceding claims, comprising influencing the positioning means as a function of the result of at least one thickness measurement of an article injection-moulded in a previous cycle.

8. Method according to Claim 7, comprising measuring the thickness of the article in several locations.

9. Installation for injection moulding of a plastic article by means of the method according to one of the preceding claims, comprising:
- a mould (1) having two mould parts which can he moved with respect to one another,
- injection means (5) for injecting the hot, molten plastic (26) into the mould cavity (6), **characterized by**
- positioning means (9, 22) for positioning the mould parts (2, 3) with respect to one another in a nominal mutual position such that a mould cavity (6) is obtained, which nominal mutual position of the mould parts is adjustable during or directly after inj ection, and
- a control device (23) for influencing the positioning means (9, 22) by rapid control action in such a way that the desired nominal mutual position of the mould parts (2, 3) defining the mould cavity (6) is adjustably maintained as desired when injecting the material (26) into the mould cavity (6) under pressure or directly after injection.

10. Installation according to Claim 9, wherein the positioning means comprise screw actuators (9), each of which can be driven by means of its own motor (22).

11. Installation according to Claim 10, wherein one of the mould parts (2) is fixed to a rigidly arranged yoke (8) and the other mould part (3) is fixed to a block (4) that can be moved linearly with respect to the yoke (8).

12. Installation according to Claim 11, wherein each screw actuator (9) has a screw spindle that is rigidly fixed to the yoke (8) and a nut (13) that is mounted in the block (4) such that it can turn.

13. Installation according to Claim 12, wherein the block (4) is supported on the column (14) by means of a linear ball bearing (16).

14. Installation according to Claim 13, wherein each linear ball bearing (16) is located in a projecting collar (36) of the block (4) and the mould parts (2, 3) are located between said collars (36).

15. Installation according to one of Claims 9 - 14, wherein one of the mould parts (2) is surrounded by a vent ring (28) that is resiliently pressed against the other mould part.

16. Installation according to one of Claims 9 - 15, wherein each motor (22) is a servomotor.

## Patentansprüche

1. Verfahren zum Spritzgießen eines Kunststoffartikels mit den folgenden Schritten:
Bereitstellen einer Form (1) mit wenigstens zwei Formteilen (2, 3), die relativ zueinander bewegt werden können,
Einspritzen eines erwärmten, flüssigen Materials unter Druck in die Formkammer,
**gekennzeichnet durch**
das Bereitstellen von Positioniermitteln (9, 22) zum Positionieren der Formteile (2, 3) relativ zueinander in einer nominellen Relativposition, so dass eine Formkammer (6) erhalten wird, wobei die nominelle Relativposition während oder direkt nach dem Einspritzen einstellbar ist, und
das Bereitstellen einer Steuereinrichtung (23), die die Positioniermittel (9, 22) **durch** schnelle Steuerungseinwirkung in einer solchen Weise beeinflusst, dass die gewünschte nominelle Relativposition der Formteile, die die Formkammer (6) definieren, einstellbar wie gewünscht aufrechterhalten wird, während das Material (26) in die Formkammer (6) unter Druck eingespritzt wird oder direkt nach dem Einspritzen.

2. Verfahren nach Anspruch 1, bei dem die Formteile (2, 3) um einen bestimmten Abstand voneinander entfernt mit einer kleinen Lücke zwischen ihnen positioniert werden.

3. Verfahren nach Anspruch 1 oder 2, bei dem die Formteile (2, 3) in Bezug zueinander so positioniert werden, dass sie planparallel liegen.

4. Verfahren nach Anspruch 1, 2 oder 3, bei dem die Formteile (2, 3) während des oder folgend auf das Einspritzen des Kunststoffmaterials (26) in die Formkammer (6) unter Druck um eine kleine Strecke aufeinander zu bewegt werden, um die Schrumpfung in dem Kunststoffmaterial (26) während dessen Abkühlung zu kompensieren.

5. Verfahren nach Anspruch 4 für das Spritzgießen von Informationsträgern für eine CD oder DVD, bei dem eine Form (1) bereitgestellt wird, deren eines Formteil (3) eine Master-Disk (24) enthält, die eine spiralförmige Reihe von Vorsprüngen oder Löchern aufweist, um eine entsprechende Reihe von Vertiefungen oder Erhebungen in dem Informationsträger zu bilden, wobei bei dem Verfahren die Formteile (2, 3) aufeinander zu bewegt werden.

6. Verfahren nach Anspruch 5, bei dem die Positioniermittel (9, 22) als Funktion der Dickenmessungen der Master-Disk (24) beeinflusst werden.

7. Verfahren nach einem der vorhergehenden Ansprüche, bei dem die Positioniermittel als Funktion des Ergebnisses von wenigstens einer Dickenmessung eines Artikels beeinflusst wird, der in einem vorhergehenden Zyklus durch Spritzgießen gebildet wurde.

8. Verfahren nach Anspruch 7, bei dem die Dicke des Artikels an verschiedenen Stellen gemessen wird.

9. Installation zum Spritzgießen eines Kunststoffartikels mittels eines Verfahrens gemäß einem der vorhergehenden Ansprüche, mit:
einer Form (1) mit zwei Formteilen, die relativ zueinander bewegt werden können,
Einspritzmitteln (5) zum Einspritzen von heißem geschmolzenem Kunststoff (26) in die Formkammer (6),
**gekennzeichnet durch**
Positioniermittel (9, 22) zum Positionieren der Formteile (2, 3) relativ zueinander in einer nominellen Relativposition, so dass eine Formkammer (6) erhalten wird, wobei die nominelle Relativposition der Formteile während oder direkt nach dem Einspritzen einstellbar ist, und
eine Steuereinrichtung (23) zum Beeinflussen der Positioniermittel (9, 22) **durch** eine schnelle Steuerungseinwirkung in einer solchen Weise, dass die gewünschte nominelle Relativposition der Formteile (2, 3), die die Formkammer (6) definieren, einstellbar wie gewünscht aufrechterhalten wird, während das Material (26) in die Formkammer (6) unter Druck eingespritzt wird oder direkt nach dem Einspritzen.

10. Installation nach Anspruch 9, wobei die Positioniermittel Spindeltriebe (9) aufweisen, von denen jeder mittels seines eigenen Motors (22) angetrieben werden kann.

11. Installation nach Anspruch 10, wobei eines der Formteile (2) an einem starr aufgebauten Joch (8) fixiert ist und das andere Formteil (3) an einem Block (4) fixiert ist, der geradlinig in Bezug auf das Joch (8) bewegt werden kann.

12. Installation nach Anspruch 11, wobei jeder Spindeltrieb (9) eine Schraubspindel hat, die fest an dem Joch (8) fixiert ist und eine Mutter (13), die so in dem Block (4) montiert ist, dass sie sich drehen kann.

13. Installation nach Anspruch 12, wobei der Block (4) an der Säule (14) mittels eines linearen Kugellagers (16) gelagert ist.

14. Installation nach Anspruch 13, wobei jedes lineare Kugellager (16) in einer vorstehenden Manschette (36) des Blocks (4) positioniert ist und die Formteile (2, 3) zwischen den Manschetten (36) angeordnet sind.

15. Installation nach einem der Ansprüche 9 bis 14, wobei eines der beiden der Formteile (2) von einem Belüftungsring (28) umgeben ist, der elastisch gegen das andere Formteil gedrückt wird.

16. Installation nach einem der Ansprüche 9 bis 15, wobei jeder Motor (22) ein Servomotor ist.

## Revendications

1. Un procédé de moulage par injection d'un article en matière plastique comprenant les étapes suivantes :
- la fourniture d'un moule (1) possédant au moins deux parties de moule (2, 3) qui peuvent être déplacées l'une par rapport à l'autre,
- l'injection d'un matériau fluide, chauffé (26) dans la cavité du moule, sous pression,
**caractérisé par**
- la fourniture de moyens de positionnement (9, 22) pour positionner les parties du moule (2, 3) l'une par rapport à l'autre dans une position mutuelle nominale telle qu'une cavité du moule (6) soit obtenue, la position mutuelle nominale étant réglable pendant ou immédiatement après l'injection et
- la fourniture d'un dispositif de commande (23) agissant sur les moyens de positionnement (9, 22) par une action de commande rapide de telle façon que la position mutuelle nominale souhaitée des parties du moule définissant la cavité du moule (6) soit maintenue de façon réglable comme souhaité au moment de l'injection du matériau (26) dans la cavité du moule (6) sous pression ou immédiatement après l'injection.

2. Un procédé selon la revendication 1, comprenant le positionnement des parties du moule (2, 3) à une certaine distance d'écart incluant un étroit espace entre elles.

3. Un procédé selon la revendication 1 ou 2, comprenant le positionnement des parties du moule (2, 3) l'une par rapport à l'autre de telle façon qu'elles soient parallèles selon un plan.

4. Un procédé selon la revendication 1, 2 ou 3 comprenant le déplacement des parties du moule (2, 3) d'une petite distance l'une vers l'autre pendant ou après l'injection de la matière plastique (26) dans la cavité du moule (6) sous pression, de manière à compenser le retrait de la matière plastique (26) pendant le refroidissement de celle-ci.

5. Un procédé selon la revendication 4 pour le moulage par injection d'un support d'informations pour un CD ou un DVD, comprenant la fourniture d'un moule (1) dont une partie (3) contient un disque original (24) qui contient une série, en spirale, de saillies ou de creux de façon à former une série correspondante de dépressions ou d'élévations dans le support d'informations, comprenant l'étape consistant à déplacer les parties du moule (2, 3) l'une vers l'autre.

6. Un procédé selon la revendication 5, comprenant une action sur les moyens de positionnement (9, 22) en fonction des dimensions en épaisseur du disque original (24).

7. Un procédé selon l'une des revendications précédentes, comprenant une action sur les moyens de positionnement en fonction du résultat d'au moins une mesure de l'épaisseur d'un article moulé par injection dans un cycle précédent.

8. Un procédé selon la revendication 7, comprenant la mesure de l'épaisseur de l'article en plusieurs endroits.

9. Une installation de moulage par injection d'un article en matière plastique au moyen du procédé selon l'une des revendications précédentes, comprenant :
- un moule (1) possédant deux parties de moule qui peuvent être déplacées l'une par rapport à l'autre,
- un moyen d'injection (5) servant à injecter la matière plastique chaude, en fusion (26) dans la cavité du moule (6),
**caractérisée par**
- des moyens de positionnement (9, 22) servant à positionner les parties du moule (2, 3) l'une par rapport à l'autre dans une position mutuelle nominale telle qu'une cavité du moule (6) soit obtenue, la position mutuelle nominale des parties du moule étant réglable pendant ou immédiatement après l'injection et
- un dispositif de commande (23) servant à agir sur les moyens de positionnement (9, 22) par une action de commande rapide de telle façon que la position mutuelle nominale souhaitée des parties du moule (2, 3) définissant la cavité du moule (6) soit maintenue de façon réglable comme souhaité au moment de l'injection du matériau (26) dans la cavité du moule (6) sous pression ou immédiatement après l'injection.

10. Une installation selon la revendication 9, dans laquelle les moyens de positionnement comprennent des actionneurs à vis (9), chacun d'entre eux pouvant être entraîné au moyen de son propre moteur (22).

11. Une installation selon la revendication 10 dans laquelle une des parties du moule (2) est fixée à un bâti (8) disposé de façon rigide et l'autre partie du moule (3) est fixée à un bloc (4) qui peut être déplacé linéairement par rapport au bâti (8).

12. Une installation selon la revendication 11, dans laquelle chaque actionneur à vis (9) a un arbre fileté qui est fixé de façon rigide au bâti (8) et un écrou (13) qui est monté dans le bloc (4) de telle façon qu'il puisse tourner.

13. Une installation selon la revendication 12, dans laquelle le bloc (4) est supporté sur la colonne (14) au moyen d'un roulement à billes linéaire (16).

14. Une installation selon la revendication 13, dans laquelle chaque roulement à billes linéaire (16) est placé dans un collier en saillie (36) du bloc (4) et les parties du moule (2, 3) sont situées entre lesdits colliers (36).

15. Une installation selon l'une des revendications 9 à 14, dans laquelle une des parties du moule (2) est entourée par une bague d'évent (28) qui est comprimée de façon élastique contre l'autre partie du moule.

16. Une installation selon d'une des revendications 9 à 15, dans laquelle chaque moteur (22) est un servomoteur.
